# EUROPEAN PATENT APPLICATION

(11) **EP 2 166 221 A2**
(43) Date of publication of application: **24.03.2010**
(21) Application number: 09012095.7
(22) Date of filing: 23.09.2009
(51) Int. Cl.: F03B 7/00

(54) **Water turbine with water circulation**

(30) Priority: 23.09.2008 TW 97136461
(71) Applicant: Huang, Ching Yuan, Datong Dist. Taipei 103 (TW)
(72) Inventor: Huang, Ching Yuan, Datong Dist. Taipei 103 (TW)
(74) Representative: Banzer, Hans-Jörg

(57) **Abstract**

A water turbine (100) with water circulation has a water circulation channel (10) full of water, a water wheel (20) having a plurality of paddles (22) radially disposed on a rotatable shaft (60) and sequentially dipped into the water circulation channel (10) for generating mechanical energy when it is rotated by the water of the water channel (10), and a pressurizing pump (40) having a water intake (42) disposed within the water circulation channel (10) on a portion opposite to the paddles (22) and a nozzle (44) arranged immediate ahead of the paddles (22) within the water channel (10) for expelling a high-pressure water jet tangentially of the water wheel (20) onto the paddles (22) for rotating the water wheel (20).

## Description

### FIELD OF THE INVENTION

The present invention generally relates to a water turbine. More specifically, the present invention relates to a water turbine with water circulation.

### BACKGROUND OF THE INVENTION

Nowadays, the costs of petroleum oil have become higher than ever. In light of this high cost energy problem, thorough research into replacement energy sources for use instead of conventional fossil fuel has been conducted. In particular, in order to replace petroleum resources as an energy source, the inventor of this invention have issued a Taiwan Patent No. 395080 on June 21, 2000.

This patent utilizes a number of small water wheels each coupled to corresponding generator. The unit's actual generation and the efficiency thereof require a further improvement for meeting commercial operation.

### SUMMARY OF THE INVENTION

Accordingly, it is an object of the invention to provide a simple configuration of generating power through the utilization of large water wheel thereby improving the efficiency of power generation under principle of lever.

According to the invention, this object is achieved by a water turbine as defined in claim 1 and by a power generation apparatus as defined in claim 8. The dependent claims define preferred and advantageous embodiments of the invention.

The present invention provides a water turbine with water circulation, comprising: a water circulation channel full of water; a water wheel having a plurality of paddles radially disposed on a rotatable shaft and sequentially dipped into the water circulation channel for generating mechanical energy when it is rotated by the water of the water channel; and a pressurizing pump having a water intake arranged within the water circulation channel on a portion opposite to the paddles and a nozzle arranged downstream within the water circulation channel for expelling a high-pressure water jet tangentially of the water wheel and sequentially onto the paddles for rotating the water wheel.

### BRIEF DESCRIPTION OF THE DRAWINGS

FIG. 1 illustrates an illustrative view of the water turbine with water circulation according to a first embodiment of the present invention; and
FIG. 2 illustrates a cross-sectional view of a power generator apparatus with two parallel water turbines according to the present invention.

### DETAILED DESCRIPTION OF THE PREFERRED EMBODIMENTS

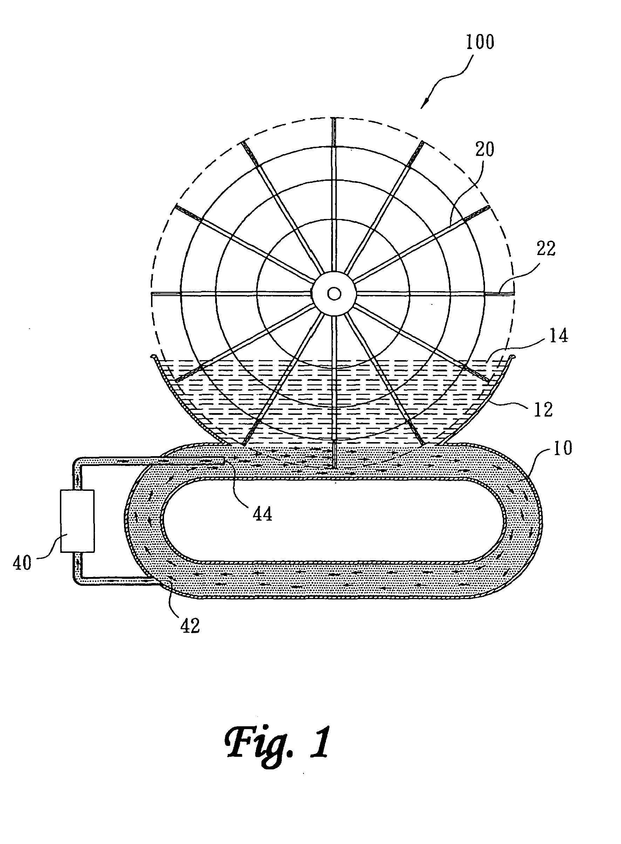

Fig. 1 illustrates a water turbine 100 with water circulation according to this invention. The water turbine 100 comprises a water circulation channel 10 full of water, a water wheel 20 having a plurality of paddles 22 radially disposed on a rotatable shaft, and a pressurizing pump 40.

Referring to Fig. 1, the water circulation channel 10 is substantially oval and has an upper elongated portion and a lower elongated portion in water communication with two curved portions as to form a circulation loop so that water can flow in a smooth flow within circulation channel 10. On the upper elongated portion, an elongated opening 14 is defined by a slant wall 12 which is shaped to ensure the water channel 10 is full of water and allow paddles 22 of the water wheel 20 to pass through the upper elongated portion of the water channel 10. As shown, when water flows from the left to the right as indicated by arrows, the paddles 22 are sequentially driven and dipped into the water such that the water wheel 20 rotates in counterclockwise and generates mechanical energy. It is to be understood that the oval configuration of the water circulation channel 10 can be changed from that shown, such as circular, if such is the desire of the user. In any circumstance the configuration of the water channel should be smoothly contoured in a uniform and evenly changing curvilinear shape in order to provide smooth water flow within the channel for the purpose of minimizing turbulence. Alternatively, the slant wall 12 may form as a housing as to hermetically seal the water wheel 20 for preventing water from leaking out.

While there are 12 paddles 22 on the water wheel 20, the number of paddles may be suitably adjusted depending upon the actual requirement. Further, it is to be noted that the illustrative flat paddles 22 can be replaced with curved buckets for increasing the effective area thereof.

The pressurizing pump 40 has a water intake 42 disposed within the lower elongated portion of the water circulation channel 10 and a nozzle 44 arranged immediate ahead of the paddles 22 within the water channel 10 for expelling a high-pressure water jet tangentially of the water wheel 20 onto the paddles 22. The water jet draws the water within the water circulation channel 10 thereby completing the driving of the paddles 22 and water circulation within the water channel 10. As the rotation of the water wheel has provided a downward force from a paddle 22 as a lever arm, an energy transformation is thus completed. The energy of the water flow passed through paddles 22 has been decreased then the water flow sequentially flowing through the lower elongated portion is drawn and pressurized by pressurizing pump 40 for providing said high-pressure water jet. The operation of the water circulation within the water channel 10 is thus completed.

With the combination of pressurizing pump 40 and water circulation channel 10, the water within the channel 10 continuously flows within the circulation channel 10 as indicated by arrows in Fig. 1 for power generation.

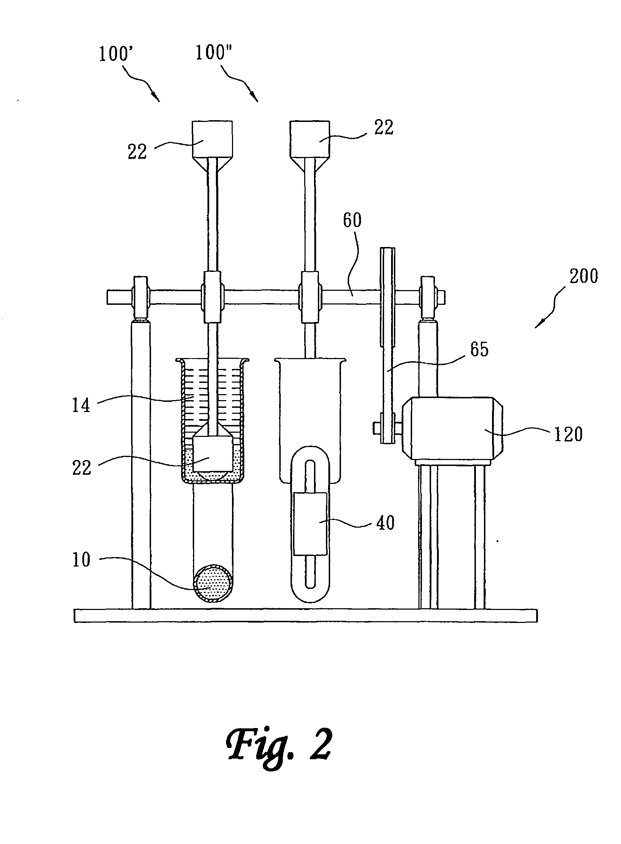

Fig. 2 illustrates a power generating apparatus 200 with two turbines 100', 100" coupled in a parallel configuration. In addition to these two turbines, the power generating apparatus 200 further includes a generator 120 coupled with the turbines 100', 100" through a shaft 60 such that the rotary power developed by the waterwheels can be utilized for generating electric power. The generator 120 is rotated by the turbines 100', 100" through a belt 65. It is to be noted that the belt 65 can be neglected, i.e., the generator 200 is coupled with the turbines 100', 100" directly for reducing energy loss due to belt transmission. Additionally, a ballast weight (not shown) may be arranged on the shaft 60 in parallel with the turbine as to stabilize the rotation of the turbine.

As shown in Fig. 2, it is shown that the paddles 22 are dipped within the water of the water circulation channel 10 and the opening 14 allows the paddles 22 to leave the circulation channel 10.

As will become apparent from the foregoing description of the applicant's turbines, as only part of the paddles 22 is dipped within the circulation channel 10 and a paddle 22 of lever arm in combination of pressurizing pump 40, the water flow within the circulation channel 10 can continuously flows for power generation.

Though the illustrative embodiment is described with two turbines, it is apparent that the power generating apparatus may be operated with more than two turbines. For example, when three turbines are used for power generation, the blades of the second turbine may be heavier than that of the other turbines and the diameter of the second turbine may be longer than that of the other turbines for providing higher torque.

While preferred embodiments of the present invention are shown and described, it is envisioned that those skilled in the art may devise various modifications of the present invention without departing from the spirit and scope of the appended claims.

## Claims

1. A water turbine (100; 100'; 100") with water circulation, comprising:
a water circulation channel (10) full of water;
a water wheel (20) having a plurality of paddles (22) radially disposed on a rotatable shaft (60) and sequentially dipped into the water circulation channel (10) for generating mechanical energy when it is rotated by the water of the water channel (10); and
a pressurizing pump (40) having a water intake (42) disposed within the water circulation channel (10) on an portion opposite to the paddles (22) and a nozzle (44) arranged immediate ahead of the paddles (22) within the water channel (10) for expelling a high-pressure water jet tangentially of the water wheel onto the paddles (22) for rotating the water wheel (20).

2. The water turbine with water circulation according to claim 1, wherein said water circulation channel (10) is oval.

3. The water turbine with water circulation according to claim 1 or 2, wherein said water circulation channel (10) defines an elongated opening (14) by a slant wall (12) for the paddles (22) of the water wheel (20) to pass therethrough.

4. The water turbine with water circulation according to claim 3, wherein the slant wall (12) form a housing for hermetically sealing the water wheel (20).

5. The water turbine with water circulation according to any one of claims 1-4, wherein said paddles (22) are flat in cross section.

6. The water turbine with water circulation According to claims 1-4, wherein said paddles (22) are curved in cross section.

7. The water turbine with water circulation according to claims 1-6, further comprising a ballast weight arranged on the shaft in parallel with the turbine.

8. A power generation apparatus (200), comprising:
at least one water turbine (100; 100'; 100") with water circulation as defined in any one of claims 1-7; and
a generator (120) having a shaft coupled with the shaft (60) of the at least one water turbine (100; 100'; 100").
